# EUROPÄISCHE PATENTSCHRIFT

(11) **EP 0 528 888 B1**
(45) Veröffentlichungstag und Bekanntmachung des Hinweises auf die Patenterteilung: **10.08.1994**
(21) Anmeldenummer: 91909173.6
(22) Anmeldetag: 14.05.1991
(51) Int. Cl.: B62D 5/06

(54) **VERFAHREN ZUR DÄMPFUNG VON SCHWINGUNGEN IN HYDRAULIKANLAGEN**
METHOD FOR DAMPENING VIBRATIONS IN HYDRAULIC SYSTEMS
PROCEDE D'AMORTISSEMENT DE VIBRATIONS DANS DES INSTALLATIONS HYDRAULIQUES

(30) Priorität: 18.05.1990 DE 4016006
(43) Veröffentlichungstag der Anmeldung: 03.03.1993
(73) Patentinhaber: ZF FRIEDRICHSHAFEN Aktiengesellschaft, 88038 Friedrichshafen (DE)
(72) Erfinder: MERZ, Johann, D-7070 Schwäbisch Gmünd (DE)
(86) Internationale Anmeldenummer: EP9100894
(87) Internationale Veröffentlichungsnummer: WO9117912

(56) Entgegenhaltungen:
- WO-A-89/10289
- GB-A- 1 079 389
- US-A- 3 660 979
- PATENT ABSTRACTS OF JAPAN, Band 3, Nr. 137 (M-80), 14. November 1979
- PATENT ABSTRACTS OF JAPAN, Band 13, Nr. 560 (M-906), 13. Dezember 1989

## Beschreibung

Die Erfindung betrifft ein Verfahren zur Dämpfung von Schwingungen in Hydraulikanlagen, die mit einer Hochdruckpumpe und einer an einen Verbraucher angeschlossenen Zulaufleitung arbeiten.

Es ist bekannt, daß in Radialkolbenpumpen die durch einen Exzenter nacheinander betätigten Förderkolben und ihre zugehörigen Auslaßventile für einen hohen Ungleichförmigkeitsgrad des Verbraucherzulaufstromes verantwortlich sind. Auch in Flügelzellenpumpen treten trotz der größeren Anzahl der dort verwendeten Arbeitsschieber (Flügel) in abgeschwächtem Maße noch Ungleichförmigkeiten im Zulaufstrom auf. Auf diese Weise entstehen Druckpulsationen, die je nach Pumpenbauart mehr oder weniger zur Geräuschentwicklung beitragen. Außerdem können die Druckpulsationen im Verbraucher stören, da sich diese, insbesondere bei Radialkolbenpumpen, beispielsweise in Hilfskraftlenkungen, als sogenanntes "Kribbeln" im Lenkhandrad bemerkbar machen. Man hat aus diesem Grunde schon eine Reihe von Maßnahmen vorgeschlagen, die dazu dienen, das Entstehen dieser Druckpulsationen entweder zu unterdrücken oder wenigstens abzuschwächen. So ist allgemein bekannt, einen Druckspeicher zwischen die Pumpe und dem Verbraucher einzubauen. Ein Druckspeicher läßt sich aber mit vertretbarem Aufwand nur in Fahrzeuge mit einer Zentralhydraulik einsetzen. Ebenso sieht man häufig zwischen Pumpe und Verbraucher Dehnschläuche vor. Diese Maßnahmen sind geeignet, Druckschwingungen in einem gewissen Bereich zu dämpfen. Ein völlig pulsationsfreier Zulaufstrom läß3t sich mit diesen Methoden jedoch nicht erreichen.

Eine weitere Einrichtung zur Dämpfung von in Radialkolbenpumpen entstehenden Druckschwingungen ist aus der DE-PS 28 24 239 bekannt. Man hat in dieser Pumpe einen an die Auslaßventile angeschlossenen und mit dem Verbraucher verbundenen Sammelraum so vergrößert, daß er die Wirkung eines Schwingungtilgers hat.

Auch mit dieser Lösung lassen sich Druckschwingungen und Geräusche nur teilweise unterdrücken.

Schließlich ist aus dem Dokument JP-A-01 234 628 (Patent Abstracts of Japan) noch eine Einrichtung an Scheibenbremsen mit einem Schwingungssensor und einem Schaltgerät bekannt. Beim Bremsen signalisiert der Sensor die entstehenden Schwingungen dem Schaltgerät, das daraufhin eine Kolbenpumpe einschaltet, die entsprechende Gegenschwingungen im Hydraulikkreis erzeugt. Durch die Gegenschwingungen lassen sich Bremsgeräusche dämpfen.

Der Erfindung liegt die Aufgabe zugrunde, die gegen Druckschwankungen in derartigen Hydraulikanlagen eingesetzten Maßnahmen mit vertretbarem Aufwand weiter zu senken.

Nach der Erfindung läßt sich diese Aufgabe durch den Anspruch 1 lösen. Vorteilhafte Weiterbildungen ergeben sich aus den Ansprüchen 2 bis 4 und 6. Der nebengeordnete Anspruch 5 betrifft eine weitere zweckmäßige Ausführungsform.

Nach Anspruch 1 sieht man ein Schaltgerät vor, das einen bestimmten Grenzwert für die zulässige Druckschwankung überwacht. Ein in die Zulaufleitung eingebauter Drucksensor signalisiert dem Schaltgerät eine zu hohe Druckschwankung, wodurch ein stromabwärts von dem Drucksensor in die Zulaufleitung eingesetztes Dämpfungsglied seinen Durchtrittsquerschnitt verändert. Bei einem Schwingungsberg verkleinert das Dämpfungsglied den wirksamen Querschnitt der Zulaufleitung und erzeugt einen Staudruck, der eine ankommende Druckwelle glättet. Auf diese Weise läßt sich die Schwingungsenergie abbauen. Bei einem Schwingungstal vergrößert hingegen das Dämpfungsglied den Leitungsquerschnitt, so daß die Druckverluste klein bleiben.

Nach Anspruch 2 läßt sich die Regeleinrichtung auch in Verbindung mit einer von der Fahrgeschwindigkeit abhängigen Lenkung verwenden, indem man zusätzlich ein Tachometersignal in das Steuergerät eingibt, welches das Dämpfungsglied entsprechend beeinflußt.

Nach Anspruch 3 sieht man als Dämpfungsglied vorteilhaft ein preisgünstiges Drosselventil vor.

Nach Anspruch 4 kann man in die Zulaufleitung, stromabwärts des Dämpfungsgliedes, einen weiteren Drucksensor einbauen, der die Funktion einer Rückmeldung hat und gegebenenfalls über das Schaltgerät korrigierend in den Regelvorgang eingreift. Durch diese Maßnahme lassen sich Druckschwingungen noch feiner ausregeln.

Die Ausführung nach Anspruch 5 enthält anstelle von Drucksensoren einen an der Pumpenantriebswelle angeordneten Drehwinkel- oder Drehzahlsensor. Das Signal des Drehzahlsensors wird im elektronischen Schaltgerät verarbeitet, das drehzahlabhängig den Phasenwinkel zur Ansteuerung des Dämpfungsgliedes verändert. Diese Anordnung benötigt weniger Bauteile.

Nach Anspruch 6 ist es zweckmäßig, ein in einer Flügelzellenpumpe meist vorhandenes Stromteilventil, das zum Abregeln der mit der Drehzahl steigenden Fördermenge dient, auch zur Bypass-Regelung des den Schwingungsberg bewirkenden Ölstromanteils mit heranzuziehen.

In der Zeichnung sind mehrere Ausführungsbeispiele schematisch dargestellt. Es zeigen
- Fig. 1: eine Anordnung, die mit zwei Drucksensoren und einem als Drosselventil ausgeführten Dämpfungsglied arbeitet
- Fig. 2: eine Anordnung mit einem Drehwinkel- oder Drehzahlsensor und einem Drosselventil.

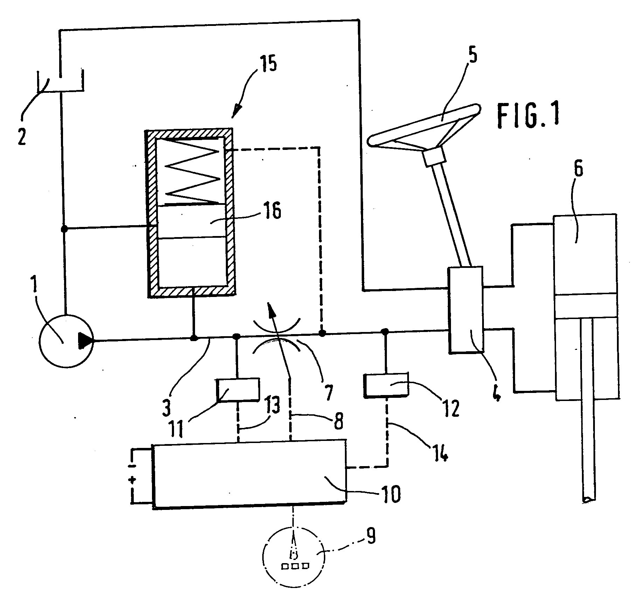

In Fig. 1 fördert eine Hochdruckpumpe 1 Drucköl aus einem Tank 2 über eine Zulaufleitung 3, beispielsweise zu einer aus einem Lenkventil 4, einem Lenkhandrad 5 und einem Servomotor 6 bestehenden Hilfskraftlenkung. Das Lenkventil 5 läßt sich in Abhängigkeit von der Drehbewegung des Lenkhandrades 5 in den beiden Lenkrichtungen verstellen. In der Zulaufleitung 3 sitzt ein als Drosselventil ausgeführtes Dämpfungsglied 7. Das Dämpfungsglied 7 kann als elektromagnetisch betätigbares, gestuftes oder konisches Nadelventil ausgeführt sein, welches in eine den Verbraucherstrom führende Steueröffnung eintaucht und den Durchströmquerschnitt verändert. Das Dämpfungsglied 7 steht über eine elektrische Steuerleitung 8 mit einem elektronischen Schaltgerät 10 in Verbindung. Weiterhin schließt an die Zulaufleitung 3 vor und gegebenenfalls hinter dem Dämpfungsglied 7 ein erster 11 bzw. ein zweiter Drucksensor 12 an. Die beiden Drucksensoren 11, 12 weisen zum Schaltgerät 10 führende elektrische Steuerleitungen 13 bzw. 14 auf. Bei geringeren Ansprüchen an die Dämpfungswirkung reicht auch der erste Drucksensor 11 alleine aus.

Die Zulaufleitung 3 hat außerdem Verbindung mit einem an sich bekannten Stromteilventil 15. Auf die Vorderseite eines Kolbens 16 wirkt der Druck vor dem Dämpfungsglied 7 ein, während der Druck stromabwärts des Dämpfungsgliedes 7 eine federbelastete Rückseite des Kolbens 16 beaufschlagt. Durch den am Dämpfungsglied 7 entstehenden Differenzdruck läßt sich, vorzugsweise in Flügelzellenpumpen, mit steigender Pumpendrehzahl ein Teil des Förderstromes über die Vorderseite des Kolbens 16 zum Tank 2 abregeln.

Im Schaltgerät 10 ist ein bestimmter Grenzwert für die zulässige Druckschwankung eingegeben. Stellt der erste Drucksensor 11 eine zu hohe Druckschwankung fest, so erhalt das Schaltgerät 10 ein Signal, das daraufhin das Dämpfungsglied 7 veranlaßt, den Durchtrittsquerschnitt der Zulaufleitung 3 weiter zu schließen. Dadurch entsteht ein höherer staudruck, der die ankommende Druckwelle glättet.

Liegen die Druckwellen unterhalb des in das Schaltgerät 10 eingegebenen Grenzwertes, dann öffnet das Dämpfungsglied 7 einen größeren Zulaufquerschnitt. Der hinter dem Dämpfungsglied 7 angeordnete zweite Drucksensor 12 kontrolliert den beruhigten Ölstrom und regelt gegebenenfalls über das Schaltgerät 10 nach.

Nimmt man an, daß sich der Strömungsquerschnitt am Dämpfungsglied 7 verringert, dann steigt der Druck auf der Vorderseite des Kolbens 16 geringfügig an. Dadurch öffnet dieser eine Rücklaufleitung, und es kann ein Teilstrom zum Tank 2 abfließen. Auf diese Weise läßt sich zum Abbau des Druckstaus vorteilhaft das ohnehin vorhandene Stromteilventil 15 mit einsetzen. Der Differenzdruck an der Drossel bleibt dabei weitgehend gleich.

Die Einrichtung nach Fig. 1 läßt sich auch mit einer geschwindigkeitsabhängigen Stromregelung kombinieren, wie diese z. B. aus der internationalen Veröffentlichung WO 89/10289 bekannt ist. In diesem Falle erhalt das Schaltgerät 10 von einem strichpunktiert angedeuteten Tachometer 9 ein fahrgeschwindigkeitsabhängiges Steuersignal. Mit steigender Fahrgeschwindigkeit regelt das Schaltgerät 10 den Durchflußquerschnitt durch das Dämpfungsglied 7 immer stärker ab, so daß der Servomotor 6 über das Lenkventil 4 weniger Drucköl erhält. Die überschüssige Ölmenge kann, wie bereits erwähnt, durch den an der Vorderseite des Kolbens 16 wirkenden Differenzdruck zum Tank 2 abfließen. Geht man davon aus, daß im Dämpfungsglied 7 ein elektromagnetisch betätigtes Nadelventil eingebaut ist, so überlagern sich an diesem zwei Bewegungen. Zu der stellungsunabhängigen Dämpfungsbewegung des Nadelventils zur Beruhigung des Ölstromes kommt noch die Abregelbewegung zur Verringerung des Durchtrittsquerschnitts hinzu.

In bestimmten Fällen kann es vorteilhaft sein, in die Zulaufleitung 3 vor das Dämpfungsglied 7 bzw. 17 einen mit einer kleinen Volumenaufnahme ausgestatteten Hydrospeicher einzusetzen (nicht dargestellt). Dieser Hydrospeicher kann dann kurzzeitig einen hohen von der Pumpe gelieferten Ölstrom speichern. Ein Hydrospeicher läßt sich auch in Verbindung mit Radialkolbenpumpen verwenden, die in der Regel ohne ein Stromteilventil 15 auskommen, da sich Radialkolbenpumpen mit steigender Drehzahl selbst abregeln. Der beim Glätten der Druckschwingungen entstehende Ölstau läßt sich dann im Druckspeicher aufnehmen.

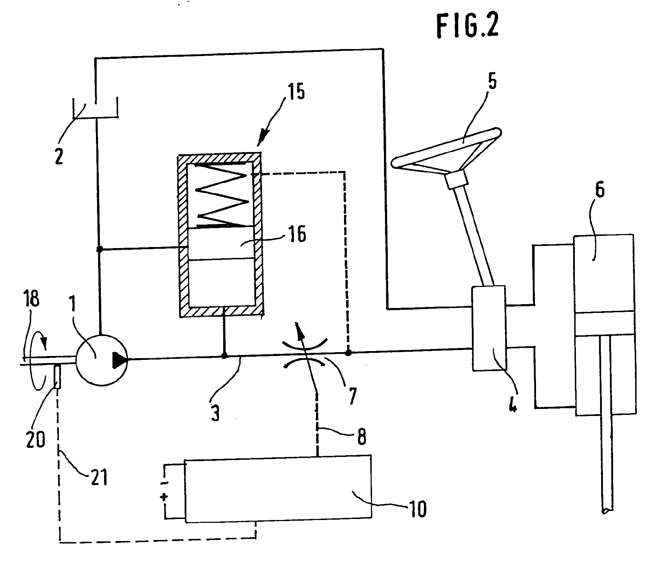

Nach Fig. 2 ist es ohne weiteres auch möglich, anstelle der Signale der beiden Drucksensoren 11 und 12 der Fig. 1, Signale eines an einer Pumpenantriebswelle 18 angeordneten Drehwinkel- oder Drehzahlsensors 20 zum Steuern des elektronischen Schaltgeräts 10 zu verwenden. Zu diesem Zweck führt vom Drehzahlsensor 20 eine Steuerleitung 21 zum Schaltgerät. Durch das Schaltgerät 10 läßt sich in Abhängigkeit von der Drehzahl der phasenwinkel für die Ansteuerung des Dämpfungsgliedes 7 verändern.

### Bezugszeichen

- 1: Hochdruckpumpe
- 2: Tank
- 3: Zulaufleitung
- 4: Lenkventil
- 5: Lenkhandrad
- 6: Servomotor
- 7: Dämpfungsglied (Drosselventil)
- 8: Steuerleitung
- 9: -
- 10: elektronisches Schaltgerät
- 11: erster Drucksensor
- 12: zweiter Drucksensor
- 13: Steuerleitung
- 14: Steuerleitung
- 15: Stromteilventil
- 16: Kolben
- 17: Dämpfungsglied (kleine Kolbenpumpe)
- 18: Pumpenantriebswelle
- 19: -
- 20: Drehzahlsensor
- 21: Steuerleitung

## Patentansprüche

1. Verfahren zur Dämpfung von Schwingungen in Hydraulikanlagen mit einer Hochdruckpumpe und mit einer an einen Verbraucher angeschlossenen Zulaufleitung, dadurch **gekennzeichnet**, daß ein Schaltgerät (10) vorgesehen ist, das einen bestimmten Grenzwert für die zulässige Druckschwankung überwacht, wobei ein in die Zulaufleitung (3) eingebauter Drucksensor (11) eine zu hohe Druckschwankung dem Schaltgerät (10) signalisiert, welches ein stromabwärts von dem Drucksensor (11) eingesetztes Dämpfungsglied (7) so verstellt, daß sich der Durchtrittsquerschnitt der Zulaufleitung (3) verengt und die ankommende Druckwelle geglättet wird.

2. Verfahren nach Anspruch 1, dadurch **gekennzeichnet**, daß das Steuergerät (10) mit einem Tachometer (9) verbunden ist, so daß die Lenkeinrichtung (4, 5, 6) in Abhängigkeit von der Fahrgeschwindigkeit ansteuerbar ist (Fig. 1).

3. Verfahren nach Anspruch 1, dadurch **gekennzeichnet**, daß als Dämpfungsglied (7) ein Drosselventil vorgesehen ist (Fig. 1).

4. Verfahren nach Anspruch 1, dadurch **gekennzeichnet**, daß in der Zulaufleitung (3) stromabwärts des Dämpfungsgliedes (7) ein weiterer Drucksensor (12) eingebaut ist, der den beruhigten Ölstrom kontrolliert und gegebenenfalls über das Schaltgerät (10) nachregelt.

5. Verfahren zur Dämpfung von Schwingungen in Hydraulikanlagen, mit einer Hochdruckpumpe und mit einer an einen Verbraucher angeschlossenen Zulaufleitung, dadurch **gekennzeichnet**, daß ein Schaltgerät (10) vorgesehen ist, das einen bestimmten Grenzwert für die zulässige Druckschwankung überwacht, wobei die Signale eines an einer Pumpenantriebswelle (18) angeordneten Drehwinkel- bzw. Drehzahlsensors (20) in das Schaltgerät (10) eingegeben werden und sich durch das Schaltgerät (10) in Abhängigkeit von der Drehzahl der Phasenwinkel für die Ansteuerung eines, in die Zulaufleitung (3) eingesetzten Dampfungsgliedes (7) durch Drosseln dieser Zulaufleitung so verändern läßt, daß Druckwellen geglättet werden.

6. Verfahren nach den Ansprüchen 1 und 5, dadurch **gekennzeichnet,** daß das bei der Dämpfung entstehende Überschußöl über ein Stromteilventil (15) zum Tank (2) abgeleitet wird (Fig. 1 und 2).

## Claims

1. A method of damping vibrations in hydraulic systems with a high pressure pump and with a feeder line connected to a consumer, characterised in that a switching device (10) is provided which monitors a certain threshold value for the admissible pressure fluctuation, wherein a pressure sensor (11) fitted in the feeder line (3) signals an excessively high pressure fluctuation to the switching device (10) which adjusts a damping element (7) placed downstream of the pressure sensor (11) so that the flow cross-section of the feeder line (3) is narrowed and the approaching pressure wave is smoothed.

2. A method according to claim 1, characterised in that the control device (10) is connected to a tachometer (9) so that the steering mechanism (4, 5, 6) is controllable as a function of the driving speed (figure 1).

3. A method according to claim 1, characterised in that a throttle valve is provided as the damping element (7) (figure 1).

4. A method according to claim 1, characterised in that a further pressure sensor (12) is fitted in the feeder line (3), downstream of the damping element (7), said further pressure sensor (12) controlling the damped oil flow and optionally adjusting it via the switching device (10).

5. A method of damping vibrations in hydraulic systems with a high pressure pump and with a feeder line connected to a consumer, characterised in that a switching device (10) is provided which monitors a certain threshold value for the admissible pressure fluctuation, wherein the signals from an angle of rotation or a rotary speed sensor (20), arranged on a pump drive shaft (18), are entered in the switching device (10), and the phase angle for controlling a damping element (7) placed in the feeder line (3), by means of throttles in said feeder line, can be changed by the switching device (10) as a function of the rotational speed, so that pressure waves are smoothed.

6. A method according to claims 1 and 5, characterised in that the excess oil arising during the damping is discharged to the tank (2) via a flow dividing valve (15) (figures 1 and 2).

## Revendications

1. Procédé d'amortissement d'oscillations dans des installations hydrauliques comportant une pompe à haute pression et un conduit d'alimentation raccordé à un consommateur, **caractérisé** en ce qu'il est prévu un appareil de commande (10), qui surveille une valeur limite déterminée de la variation admissible de la pression, et un capteur de pression (11) monté sur le conduit d'alimentation (3) et signalant une variation de pression trop élevée à l'appareil de commande (10), lequel règle un organe d'amortissement (7) installé en aval du capteur de pression (11) de manière à rétrécir la section de passage du conduit d'alimentation et à lisser l'onde de pression qui l'atteint.

2. Procédé selon la revendication 1, **caractérisé** en ce que l'appareil de commande (10) est couplé à un tachymètre (9), de sorte que le mécanisme de direction (4, 5, 6) peut être commandé en fonction de la vitesse de marche (Fig. 1).

3. Procédé selon la revendication 1, **caractérisé** en ce qu'une valve à étranglement est prévue comme organe d'amortissement (7) (Fig. 1).

4. Procédé selon la revendication 1, **caractérisé** en ce qu'un second capteur de pression (12) est monté sur le conduit d'alimentation (3) en aval de l'organe d'amortissement (7) et en ce que ce capteur contrôle le flux hydraulique amorti et, le cas échéant, produit un réglage additionnel par l'appareil de commande (10).

5. Procédé d'amortissement d'oscillations dans des installations hydrauliques comportant une pompe à haute pression et un conduit d'alimentation raccordé à un consommateur, **caractérisé** en ce qu'il est prévu un appareil de commande (10) qui surveille une valeur limite déterminée de la variation admissible de la pression, et dans lequel les signaux d'un capteur d'angle ou de vitesse de rotation (20) disposé sur un arbre d'entraînement (18) de la pompe sont délivrés à l'appareil de commande (10) qui, en fonction de la vitesse de rotation, fait varier l'angle de phase pour la commande d'un organe d'amortissement (7) installé sur le conduit d'alimentation (3) pour étrangler ce conduit de manière à lisser des ondes de pression.

6. Procédé selon les revendications 1 et 5, **caractérisé** en ce que l'huile excédentaire due à l'amortissement est dérivée vers le réservoir (2) au moyen d'une valve de répartition de débit (15) (Fig. 1 et 2).
